# EUROPEAN PATENT APPLICATION

(11) **EP 4 765 834 A1**
(43) Date of publication of application: **24.06.2026**
(21) Application number: 24907882.5
(22) Date of filing: 29.11.2024
(51) Int. Cl.: H04N 21/431, H04N 21/4728, H04N 21/485, H04N 21/41, H04N 9/31

(54) **ELECTRONIC DEVICE AND CONTROL METHOD THEREFOR**

(30) Priority: 22.12.2023 KR 20230190077
(71) Applicant: Samsung Electronics Co., Ltd., Suwon-si, Gyeonggi-do 16677 (KR)
(72) Inventor: YOON, Sangki, Suwon-si Gyeonggi-do 16677 (KR); KIM, Dongyoon, Suwon-si Gyeonggi-do 16677 (KR); KIM, Junghee, Suwon-si Gyeonggi-do 16677 (KR)
(74) Representative: Appleyard Lees IP LLP
(86) International application number: PCT/KR2024/019402
(87) International publication number: WO 2025/135597

(57) **Abstract**

An electronic device is disclosed. The electronic device comprises: an output unit; a memory for storing one or more instructions; and one or more processors operatively connected to the output unit and the memory, wherein the one or more processors, by executing the one or more instructions, control the output unit so as to output a screen containing a background area and a plurality of display areas when a multi-view mode is executed, and when a first display area is selected from among the plurality of display areas, control the output unit so as to expand the size of the selected first display area and provide an effect whereby the expanded first display area moves in the direction toward the front of the background area.

## Description

### [TECHNICAL FIELD]

The disclosure relates to an electronic apparatus and a control method therefor, and more particularly, to an electronic apparatus that outputs images, and a control method therefor.

### [BACKGROUND ART]

Fueled by development of electronic technologies, various types of electronic apparatuses are being developed and distributed. In particular, electronic apparatuses used in various places such as a home, an office, a public place, etc. have been continuously developing in the recent few years.

In particular, a beam projector is being used in various places such as an office, a theater, a home, a shop, etc., and the market for it is continuously increasing. As a home/portable beam projector, products of various form factors are increasing according to a trend of high efficiency and low power consumption of light-emitting diode (LED) light sources, and the market is increasing by 10 to 15% or more every year.

Also, as a wired/wireless interface function between a beam projector device and an external device has increased recently, it is now possible to select and output various contents in various places in real time through Wi-Fi and a 5G network.

### [DISCLOSURE OF INVENTION]

### [SOLUTION TO PROBLEM]

An electronic apparatus according to one or more embodiments of the disclosure includes an outputter, memory storing at least one instruction, and at least one processor operatively connected with the outputter and the memory, wherein the at least one processor is configured to, by executing the at least one instruction, based on a multi-view mode being executed, control the outputter to output a screen including a background area and a plurality of display areas, and based on a first display area being selected among the plurality of display areas, control the outputter to provide an effect that the size of the selected first display area is expanded, and the expanded first display area moves in a front direction of the background area.

According to one or more embodiments, the at least one processor may, by executing the at least one instruction, control the outputter to provide an effect that a size of a second display area that was not selected among the plurality of display areas is reduced, and the reduced second display area moves in a rear direction of the background area.

According to one or more embodiments, the background area may be an area having a sense of space, and the at least one processor may, by executing the at least one instruction, identify a bottom area included in the background area, and control the outputter to provide an effect that the expanded first display area moves in a front direction in the identified bottom area, and the reduced second display area moves in a rear direction in the bottom area.

According to one or more embodiments, the at least one processor may, by executing the at least one instruction, control the outputter to provide an animation effect that the size of the selected first display area gradually expands and the first display area gradually moves in the front direction in the identified bottom area, and the size of the second display area that was not selected is gradually reduced and the second display area gradually moves in the rear direction in the bottom area.

According to one or more embodiments, the at least one processor may, by executing the at least one instruction, based on a zoom-out instruction for the background area being input, control the outputter to output the background area in zoom-out by additionally outputting edge areas of the background area that were not output, and output the plurality of display areas in zoom-out by reducing the sizes of the display areas, and based on a zoom-in instruction for the background area being input, control the outputter to output the background area in zoom-in such that the edge areas of the background area that were output are not output, and output the plurality of display areas in zoom-in by expanding the sizes of the display areas.

According to one or more embodiments, the at least one processor may, by executing the at least one instruction, based on an instruction for rotation for the background area being input, control the outputter such that output locations of the plurality of display areas are fixed and the background area is output in a rotated form.

According to one or more embodiments, the at least one processor may, by executing the at least one instruction, based on an instruction for rotation for the background area being input, control the outputter such that the background area is output in a rotated form, and the plurality of display areas are output in rotated forms that are linked to the background area in a rotated form.

According to one or more embodiments, the electronic apparatus may further include a speaker, and the at least one processor may, by executing the at least one instruction, based on the size of the first display area being expanded and the first display area being output in a form of moving in the front direction of the background area, control the speaker to increase an audio volume of a content provided in the first display area and output the content.

According to one or more embodiments, the electronic apparatus may further include a speaker, and the at least one processor may, by executing the at least one instruction, based on the size of the first display area being expanded and the first display area being output in a form of moving in the front direction of the background area, control the speaker and at least one external speaker such that a sound field that audio of a content provided in the first display area is output to be close to a user is provided.

According to one or more embodiments, the outputter may include at least one of a display or an image projection part.

A control method for an electronic apparatus according to one or more embodiments includes the steps of, based on a multi-view mode being executed, outputting a screen including a background area and a plurality of display areas, and based on a first display area being selected among the plurality of display areas, providing an effect that the size of the selected first display area is expanded, and the expanded first display area moves in a front direction of the background area.

In a non-transitory computer-readable medium storing computer instructions which, when executed by a processor of an electronic apparatus, cause the electronic apparatus to perform operations according to one or more embodiments, the operations include the steps of, based on a multi-view mode being executed, outputting a screen including a background area and a plurality of display areas, and based on a first display area being selected among the plurality of display areas, providing an effect that the size of the selected first display area is expanded, and the expanded first display area moves in a front direction of the background area.

### [BRIEF DESCRIPTION OF DRAWINGS]

The aforementioned and other aspects, characteristics, and advantages of specific embodiments of the disclosure will become clearer from the following description with reference to the accompanying drawings.
FIG. 1 is a diagram for illustrating an implementation example of an electronic apparatus according to one or more embodiments;
FIG. 2A is a block diagram illustrating a configuration of an electronic apparatus according to one or more embodiments;
FIG. 2B is a diagram for illustrating a detailed configuration of an electronic apparatus according to one or more embodiments;
FIG. 3 is a flow chart for illustrating a control method for an electronic apparatus according to one or more embodiments;
FIG. 4A is a diagram for illustrating a method of providing a multi-view mode according to one or more embodiments;
FIG. 4B is a diagram for illustrating a method of providing a multi-view mode according to one or more embodiments;
FIG. 4C is a diagram for illustrating a method of providing a multi-view mode according to one or more embodiments;
FIG. 5 is a flow chart for illustrating a control method for an electronic apparatus according to one or more embodiments;
FIG. 6 is diagrams for illustrating a method of providing a multi-view mode according to one or more embodiments;
FIG. 7 is a flow chart for illustrating a control method for an electronic apparatus according to one or more embodiments;
FIG. 8 is a diagram for illustrating a method of providing a multi-view mode according to one or more embodiments; and
FIG. 9 is a flow chart for illustrating a control method for an electronic apparatus according to one or more embodiments.

### [MODE FOR INVENTION]

First, terms used in this specification will be described briefly, and then the disclosure will be described in detail.

As terms used in the embodiments of the disclosure, general terms that are currently used widely were selected as far as possible, in consideration of the functions described in the disclosure. However, the terms may vary depending on the intention of those skilled in the art who work in the pertinent field, previous court decisions, or emergence of new technologies, etc. Also, in particular cases, there may be terms that were designated by the applicant on his own, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in this specification, expressions such as "have," "may have," "include," and "may include" denote the existence of such characteristics (e.g.: elements such as numbers, functions, operations, and components), and do not exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including only A, (2) including only B, or (3) including both of A and B.

Further, the expressions "first," "second," and the like used in this specification may describe various elements regardless of any order and/or degree of importance. Also, such expressions are used only to distinguish one element from another element, and are not intended to limit the elements.

The description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Also, the expression "configured to" used in the disclosure may be interchangeably used with other expressions such as "suitable for," "having the capacity to," "designed to," "adapted to," "made to," and "capable of," depending on cases. The term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

Also, singular expressions include plural expressions, unless defined obviously differently in the context. In addition, in the disclosure, terms such as "include" and "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

Further, in the embodiments of the disclosure, "a module" or "a part" may perform at least one function or operation, and may be implemented as hardware or software, or as a combination of hardware and software. In addition, a plurality of "modules" or "parts" may be integrated into at least one module and implemented as at least one processor, excluding "a module" or "a part" that needs to be implemented as specific hardware.

Various elements and areas in the drawings were illustrated schematically. Accordingly, the technical idea of the disclosure is not limited by the relative sizes or intervals illustrated in the accompanying drawings.

Hereinafter, an embodiment of the disclosure will be described in more detail with reference to the accompanying drawings.

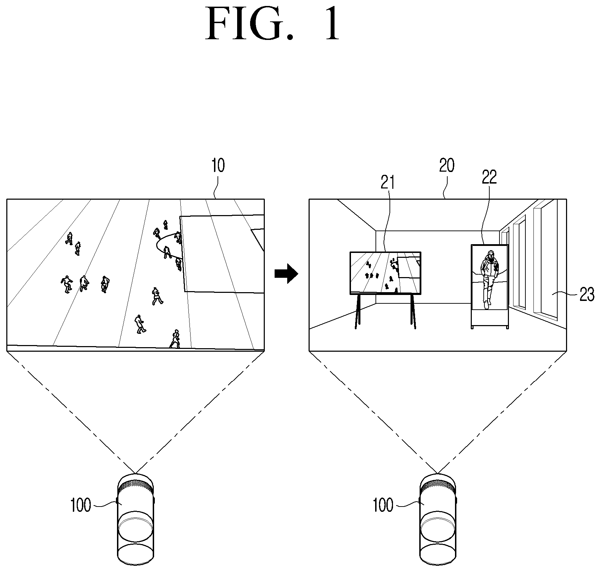

FIG. 1 is a diagram for illustrating an implementation example of an electronic apparatus according to one or more embodiments.

The electronic apparatus 100 according to an embodiment may be equipped with a function of projecting an image, i.e., a projector function. In particular, the electronic apparatus 100 may be a projector device that projects an image on a wall or a projection surface, and the projector device may be an LCD projector or a projector by a digital light processing (DLP) method using a digital micromirror device (DMD).

Also, the electronic apparatus 100 may be implemented as a display device for a household or an industrial use, an illumination device used in everyday lives, an audio device including an audio module, a portable communication device (e.g.: a smartphone), a computer device, a portable multimedia device, a wearable device, or a home appliance, etc. However, the electronic apparatus 100 is not limited to the aforementioned devices, and the electronic apparatus 100 may be implemented as an electronic apparatus 100 equipped with two or more functions of the aforementioned devices. For example, according to a manipulation of a processor, a projector function of the electronic apparatus 100 is turned off, and an illumination function or a speaker function is turned on, and the electronic apparatus 100 may be utilized as a display device, an illumination device, or an audio device. Also, the electronic apparatus 100 may include a microphone or a communication device, and may be utilized as an AI speaker.

According to FIG. 1, if a multi-view mode is executed while a general projection surface 10 is being provided, a projection screen 20 including a plurality of display areas 21, 22 and a background area 23 may be provided.

According to an embodiment, the multi-view mode may be a mode wherein a plurality of content screens are provided simultaneously. For example, in the multi-view mode, not only the plurality of display areas 21, 22 for providing a plurality of contents but also the background area 23 may be provided together. For example, the background area may be provided as a predetermined theme image. The predetermined theme may include various types of themes such as a nature theme, a city theme, a country theme, a home space theme, etc.

According to an embodiment, if any one of the plurality of display areas 21, 22 is selected in the multi-view mode, various user experience (UX) experiences for improving the concentration of the user for a content provided in the selected display area may be provided.

Accordingly, hereinafter, various embodiments for improving the concentration of the user for a selected content among the plurality of contents provided in the multi-view mode will be explained.

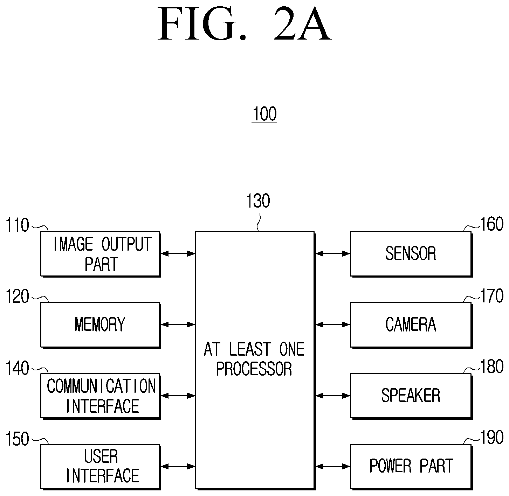

FIG. 2A is a block diagram illustrating a configuration of an electronic apparatus according to one or more embodiments.

According to FIG. 2A, the electronic apparatus 100 may include an outputter 110, memory 120, and at least one processor 130. The electronic apparatus 100 can be implemented as a projector that projects an image on a wall or a projection surface, or various types of devices equipped with an image projection function. However, the disclosure is not limited thereto, and the electronic apparatus 100 may be implemented as a display device such as a TV.

According to FIG. 2A, the electronic apparatus 100 may include an outputter 110, memory 120, and at least one processor 140.

The outputter 110 may include at least one of an image projection part or a display depending on implementation examples of the electronic apparatus 100. According to an embodiment, in case the electronic apparatus 100 is implemented as a projector, the outputter 110 may be implemented as an image projection part. According to another embodiment, in case the electronic apparatus 100 is implemented as a TV, the outputter 110 may be implemented as a display. In case the outputter 110 is implemented as a display, the display may be implemented as a display including self-luminous diodes or a display including non-self-luminous diodes and a backlight. For example, the display may be implemented as various forms of displays such as a liquid crystal display (LCD), an organic light emitting diodes (OLED) display, light Emitting diodes (LED), micro LED, mini LED, a plasma display panel (PDP), a quantum dot (QD) display, quantum dot light emitting diodes (QLED), etc. According to an embodiment, the display may be implemented as a flat display, a curved display, a flexible display that can be folded and/or rolled, etc.

Hereinafter, for the convenience of explanation, explanation will be described by assuming a case wherein the outputter 110 is implemented as an image projection part.

The outputter 110 may perform a function of outputting an image on a projection surface by projecting a light for expressing an image to the outside. Here, the projection surface may be a part of a physical space wherein an image is output, or a separate projection surface. The outputter 110 may include various detailed components such as at least one light source among a lamp, LED, and a laser, a projection lens, a reflector, etc.

The outputter 110 may project an image by one of various projection methods (e.g., a cathode-ray tube (CRT) method, a liquid crystal display (LCD) method, a digital light processing (DLP) method, a laser method, etc.). The outputter 110 may include at least one light source.

The outputter 110 may output an image in a screen ratio of 4:3, a screen ratio of 5:4, and a wide screen ratio of 16:9 according to the use of the electronic apparatus 100 or the user's setting, etc., and output an image in various resolutions such as WVGA (854*480), SVGA (800*600), XGA (1024*768), WXGA (1280*720), WXGA (1280*800), SXGA (1280*1024), UXGA (1600*1200), Full HD (1920*1080), etc. according to screen ratios.

The outputter 110 may perform various functions for adjusting a projection image by control by the processor 130. For example, the outputter 110 may perform a zoom-in/zoom-out function, a lens shift function, etc. The zoom-in/zoom-out function may include a hardware method of adjusting the size of a screen by moving a lens, and a software method of adjusting the size of a screen by a crop, etc. Meanwhile, when the zoom-in/zoom-out function is performed, adjustment of a focus of an image is needed. For example, methods of adjusting a focus may include a manual focus method, an electric method, etc.

The outputter 110 may provide zoom/keystone/focus functions by analyzing the ambient environment and a projection environment automatically without a user input. Specifically, the outputter 110 may provide zoom/keystone/focus functions automatically based on the distance between the electronic apparatus 100 and the projection surface, information on the space wherein the electronic apparatus 100 is currently located, information on the ambient light amount, etc.

The memory 120 may store data necessary for the various embodiments of the disclosure. The memory 120 may be implemented in the form of memory embedded in the electronic apparatus 100, or implemented in the form of memory that can be attached to or detached from the electronic apparatus 100 according to the use of stored data. For example, in the case of data for driving the electronic apparatus 100, the data may be stored in memory embedded in the electronic apparatus 100, and in the case of data for an extended function of the electronic apparatus 100, the data may be stored in memory that can be attached to or detached from the electronic apparatus 100. In the case of memory embedded in the electronic apparatus 100, it may be implemented as at least one of volatile memory (e.g.: dynamic RAM (DRAM), static RAM (SRAM), or synchronous dynamic RAM (SDRAM), etc.) or non-volatile memory (e.g.: one time programmable ROM (OTPROM), programmable ROM (PROM), erasable and programmable ROM (EPROM), electrically erasable and programmable ROM (EEPROM), mask ROM, flash ROM, flash memory (e.g.: NAND flash or NOR flash, etc.), a hard drive, or a solid state drive (SSD)), etc. Also, in the case of memory that can be attached to or detached from the electronic apparatus 100, it may be implemented in forms such as a memory card (e.g., compact flash (CF), secure digital (SD), micro secure digital (Micro-SD), mini secure digital (Mini-SD), extreme digital (xD), a multi-media card (MMC), etc.) and external memory that can be connected to a USB port (e.g., a USB memory), etc.

According to an embodiment, the memory 120 may store various theme images for providing a background area in the multi-view mode.

According to an embodiment, the memory 120 may store various display area images for providing a display area in the multi-view mode. For example, the display area images may include images that are identical/similar to actual display product images. For example, the display area images may include various display product images such as a stand TV image, a wall-mounted TV image, a kiosk image, etc.

The at least one processor 130 controls the overall operations of the electronic apparatus 100. Specifically, the at least one processor 130 is connected to each component of the electronic apparatus 100 and can control the overall operations of the electronic apparatus 100. For example, the at least one processor 130 may be operatively connected with the image output part 110 and the memory 120. The at least one processor 130 may include one processor or a plurality of processors.

The at least one processor 130 may perform the operations of the electronic apparatus 100 according to various embodiments by executing at least one instruction stored in the memory 120.

The at least one processor 130 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 130 may control one or a random combination of the other components of the electronic apparatus 100, and perform an operation related to communication or data processing. Also, the at least one processor 130 may execute one or more programs or instructions stored in the memory. For example, the at least one processor 130 may perform the method according to one or more embodiments of the disclosure by executing the one or more instructions stored in the memory.

In case the method according to one or more embodiments of the disclosure includes a plurality of operations, the plurality of operations may be performed by one processor, or performed by a plurality of processors. For example, when a first operation, a second operation, and a third operation are performed by the method according to one or more embodiments, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 130 may be implemented as a single core processor including one core, or it may be implemented as one or more multicore processors including a plurality of cores (e.g., multicores of the same kind or multicores of different kinds). In case the at least one processor 130 is implemented as multicore processors, each of the plurality of cores included in the multicore processors may include internal memory of the processor such as cache memory, on-chip memory, etc., and a common cache shared by the plurality of cores may be included in the multicore processors. Also, each of the plurality of cores (or some of the plurality of cores) included in the multicore processors may independently read a program instruction for implementing the method according to one or more embodiments of the disclosure and perform the instruction, or the plurality of entire cores (or some of the cores) may be linked with one another, and read a program instruction for implementing the method according to one or more embodiments of the disclosure and perform the instruction.

In case the method according to one or more embodiments of the disclosure includes a plurality of operations, the plurality of operations may be performed by one core among the plurality of cores included in the multicore processors, or they may be performed by the plurality of cores. For example, when the first operation, the second operation, and the third operation are performed by the method according to one or more embodiments, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto. Hereinafter, the at least one processor 130 will be referred to as the processor 130, for the convenience of explanation.

According to an embodiment, when the multi-view mode is executed, the processor 130 may control the outputter 110 to output a screen including a background area and a plurality of display areas.

According to an embodiment, the multi-view mode may be a mode wherein a plurality of content screens are provided simultaneously. For example, in the multi-view mode, not only a plurality of display areas for providing a plurality of contents, but also a background area may be provided together. For example, the background area may be provided as a predetermined theme image. The predetermined theme may include various types of themes such as a nature theme, a city theme, a country theme, a home space theme, etc. According to an embodiment, the background area may include an image having a sense of space. For example, the background area may include an image which is a 2D image but has a sense of space. Depending on cases, the background area may include a 3D image. In case the background area is a 3D image, embodiments that are identical/similar to a case wherein the background area is a 2D image may also be applied.

According to an embodiment, the display areas may include images that are similar/identical to actual display product images. For example, the display areas may include various display product images such as a stand TV image, a wall-mounted TV image, a kiosk image, etc.

According to an embodiment, if a first display area is selected among the plurality of display areas, the processor 130 may control the outputter 110 to provide an effect, such as a visual effect, that the size of the selected first display area is expanded, and the expanded first display area moves in a front direction of the background area.

According to an embodiment, the processor 130 may control the outputter 110 to provide an effect that a size of a second display area that was not selected among the plurality of display areas is reduced, and the reduced second display area moves in a rear direction of the background area.

According to an embodiment, the processor 130 may identify a bottom area included in the background area, and control the outputter 110 to provide an effect that the expanded first display area moves in a front direction in the identified bottom area, and the reduced second display area moves in a rear direction in the bottom area.

According to an embodiment, the processor 130 may control the outputter 110 to provide an animation effect that the size of the selected first display area gradually expands and the first display area gradually moves in the front direction in the identified bottom area, and the size of the second display area that was not selected is gradually reduced and the second display area gradually moves in the rear direction in the bottom area.

According to an embodiment, if a zoom-out instruction for the background area is input, the processor 130 may control the outputter 110 to output the background area in zoom-out by additionally outputting edge areas of the background area that were not output, and output the plurality of display areas in zoom-out by reducing the sizes of the display areas.

According to an embodiment, if a zoom-in instruction for the background area is input, the processor 130 may control the outputter 110 to output the background area in zoom-in such that the edge areas of the background area that were output are not output, and output the plurality of display areas in zoom-in by expanding the sizes of the display areas.

According to an embodiment, if an instruction for rotation for the background area is input, the processor 130 may control the outputter 110 such that output locations of the plurality of display areas are fixed and the background area is output in a rotated form.

According to an embodiment, if an instruction for rotation for the background area is input, the processor 130 may control the outputter 110 such that the background area is output in a rotated form, and the plurality of display areas are output in rotated forms that are linked to the background area in a rotated form.

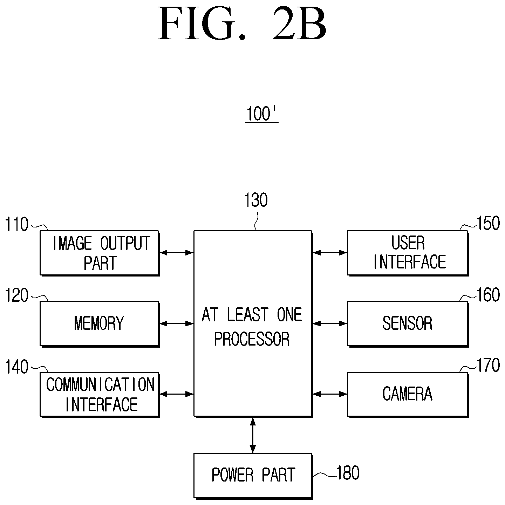

FIG. 2B is a diagram for illustrating a detailed configuration of an electronic apparatus according to one or more embodiments.

According to FIG. 2B, the electronic apparatus 100' includes an outputter 110, memory 120, at least one processor 130, a communication interface 140, a user interface 150, a sensor 160, a camera 170, a speaker 180, and a power part 190. Among the components illustrated in FIG. 2B, regarding components overlapping with the components illustrated in FIG. 2A, detailed explanation will be omitted.

The communication interface 140 includes circuitry, and may perform communication with an external device (a server or a user terminal). For example, the processor 130 may receive various types of data or information from an external device connected through the communication interface 140, and transmit various types of data or information to the external device.

The communication interface 140 may include at least one of a Wi-Fi module, a Bluetooth module, a wireless communication module, an NFC module, or an ultra wide-band (UWB) module. Here, the wireless communication module may perform communication according to various communication standards such as IEEE, Zigbee, 3^{rd} Generation (3G), 3^{rd} Generation Partnership Project (3GPP), Long Term Evolution (LTE), 5^{th} Generation (5G), etc.

Other than the above, the communication interface 140 may also perform communication according to communication methods such as Ethernet, IEEE 1394, a high-definition multimedia interface (HDMI), a universal serial bus (USB), a mobile high-definition link (MHL), Audio Engineering Society/European Broadcasting Union (AES/EBU), Optical, Coaxial, etc. depending on implementation examples of the electronic apparatus 100'.

The user interface 150 may be implemented as a device such as a button, a touch pad, a mouse, and a keyboard, or implemented as a touch projection surface, a remote control transceiver, etc. that can perform the aforementioned display function and a manipulation input function together. The remote control transceiver may receive or transmit a remote control signal from and to an external remote control device through at least one communication method among infrared communication, Bluetooth communication, or Wi-Fi communication.

The sensor 160 may include various types of sensors such as a distance sensor, an illumination sensor, an image sensor, a touch sensor, a proximity sensor, an acceleration sensor, a geomagnetic sensor, a gyro sensor, a pressure sensor, a position sensor, etc.

The camera 170 may be turned on according to a predetermined event and perform photographing. The camera 170 may convert a photographed image into an electric signal, and generate image data based on the converted signal. For example, a subject may be converted into an electric image signal through a semiconductor optical element (a charge coupled device (CCD)), and the image signal converted as such may be amplified and converted into a digital signal, and then go through signal processing.

According to an embodiment, the processor 130 may identify the user's gesture, gaze, etc. based on a photographed image obtained through the camera 170, and identify whether a user command is input based on the identified gesture, gaze, etc.

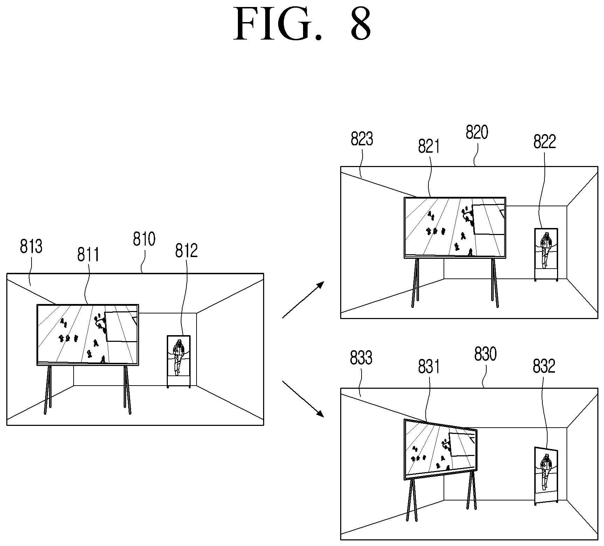

According to an embodiment, the processor 130 may identify the user's location based on a photographed image obtained through the camera 170, and provide an effect of rotating the screen in a direction corresponding to the user's location. For example, the processor 130 may provide a screen rotating effect by the same method as illustrated in FIG. 8.

The speaker 180 may output an audio signal. According to an embodiment, the speaker 180 may include a plurality of speaker units (or amps) that can output multi channels. For example, the speaker 180 may include an L channel speaker and an R channel speaker that reproduce each of an L channel and an R channel.

According to an embodiment, if the size of the first display area is expanded, and the first display area is output in a form of moving in the front direction of the background area, the processor 130 may control the speaker 180 to increase an audio volume of a content provided in the first display area and output the content.

According to an embodiment, if the size of the first display area is expanded and the first display area is output in a form of moving in the front direction of the background area, the processor 130 may control the speaker 180 and at least one external speaker such that a sound field that audio of the content provided in the first display area is output to be close to the user is provided.

The power part 190 may be provided with power from the outside, and provide power to the various components of the electronic apparatus 100. According to an embodiment, the power part 190 may be provided with power by using a connector. For example, the power part 190 may be provided with power by using a DC power code of 220V. However, the disclosure is not limited thereto, and the electronic apparatus 100 may be provided with power by using a USB power code, or provided with power by using a wireless charging method.

The power part 190 may be provided with power by using an internal battery or an external battery. For example, the power part 190 may charge the power of the internal battery by using at least one of a DC power code of 220V, a USB power code, or a USB C-type power code, and may be provided with power through the charged internal battery. For example, if connection between the electronic apparatus 100 and the external battery is performed through various wired communication methods such as a USB power code, a USB C-type power code, a socket groove, etc., the power part 190 may be provided with power through the external battery. For example, the power part 190 may be directly provided with power from the external battery, or charge the internal battery through the external battery, and may be provided with power from the charged internal battery.

Other than the above, the electronic apparatus 100' may include a microphone, etc. depending on implementation examples. The microphone is a component for receiving input of a user voice or other sounds, and converting them into audio data. According to another embodiment, the electronic apparatus 100' may receive a user voice input through an external device through the communication interface 140.

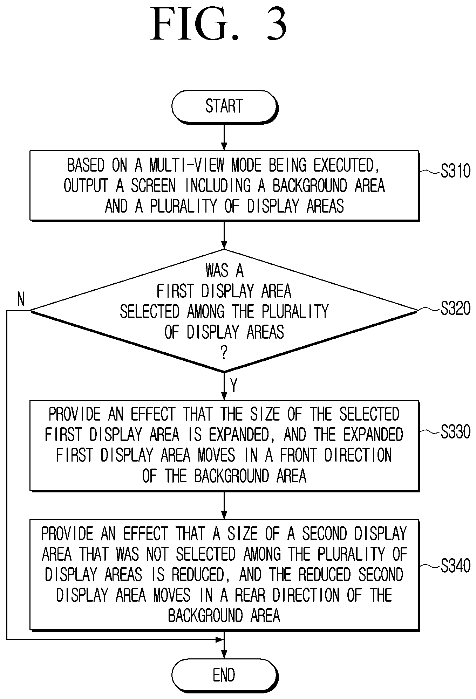

FIG. 3 is a flow chart for illustrating a control method for an electronic apparatus according to one or more embodiments.

According to FIG. 3, in the operation S310, if the multi-view mode is executed, the electronic apparatus 100 may output a screen including a background area and a plurality of display areas.

According to an embodiment, the multi-view mode may be executed (or entered) according to a user command selecting the multi-view mode, or a predetermined event. For example, a user command may be received through at least one of a remote control signal, a voice input, a gesture input, or eye tracking. For example, the predetermined event may include various events for providing a multi-view screen such as an event wherein a plurality of contents are selected, an event wherein an additional content is selected during reproduction of a specific content, etc.

In the operation S320, if a first display area is selected among the plurality of display areas, the electronic apparatus 100 may provide an effect that the size of the selected first display area is expanded, and the expanded first display area moves in the front direction of the background area in the operation S330.

In this case, in the operation S340, the electronic apparatus 100 may provide an effect that a size of a second display area that was not selected among the plurality of display areas is reduced, and the reduced second display area moves in the rear direction of the background area.

According to the aforementioned embodiment, the electronic apparatus 100 may provide an effect that the first display area selected by the user becomes close to the user's view, and the second display area not selected by the user and the background area become far from the user's view, and can thereby improve the concentration of the user for the content provided in the first display area.

In FIG. 3, orders were mapped to all steps for the convenience of explanation, but it is obvious that the orders of steps that are not related to orders or that can be performed in parallel, etc. are not necessarily limited to the orders.

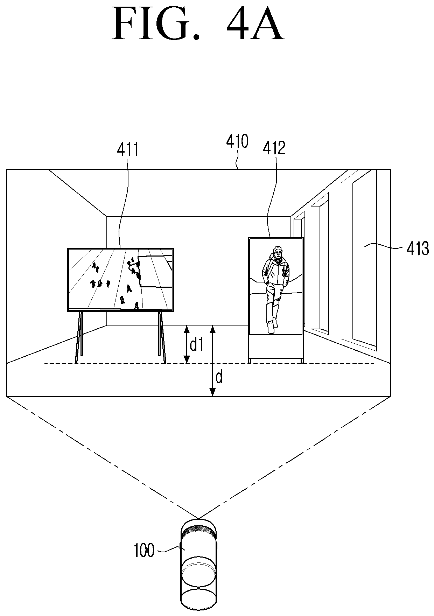

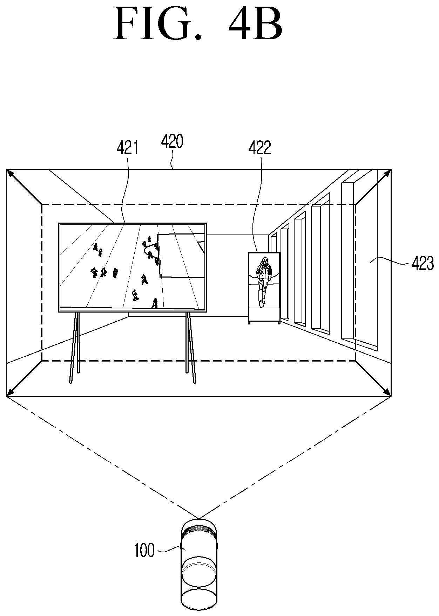

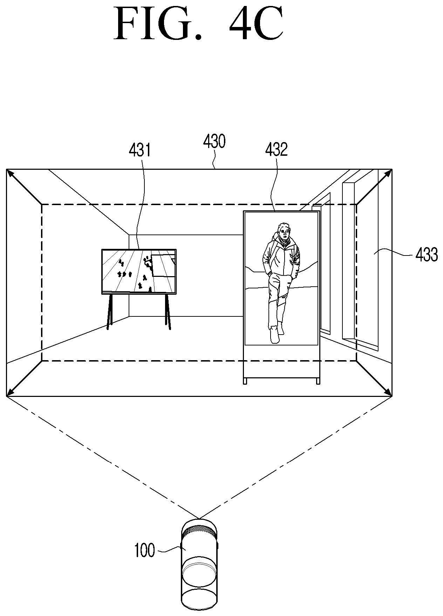

FIG. 4A, FIG. 4B, and FIG. 4C are diagrams for illustrating a method of providing a multi-view mode according to one or more embodiments.

FIG. 4A is a diagram illustrating a screen provided in a multi-view mode according to an embodiment.

According to FIG. 4A, if the multi-view mode is executed, the electronic apparatus 100 may provide a screen 410 including a plurality of display areas 411, 412 and a background area 413.

According to an embodiment, the plurality of display areas 411, 412 are areas displaying different contents from each other, and they may be provided based on actual display product images as illustrated in FIG. 4A. For example, the first display area 411 may be provided as a stand TV image, and the second display area 412 may be provided as a kiosk image. For example, the plurality of display areas 411, 412 may be provided in a picture in picture (PIP) form, but are not limited thereto.

According to an embodiment, the background area 413 may be provided as an image having a sense of space. For example, a space is one of basic formative elements and may be a three-dimensional area, and a sense of space may be a sense that makes a space felt on a plane. For example, the background area 413 may be provided as an image which is a 2D image, but wherein a three-dimensional sense of space is felt. For example, the background area 413 may be an image including a bottom area, a wall area, and a ceiling area, but is not limited thereto.

According to an embodiment, the background area 413 may be selected manually according to a user command. According to another embodiment, the background area 413 may be selected automatically based on a use history of the user, a user profile, user preference information, types of contents selected in the display areas 411, 412, etc.

According to an embodiment, the electronic apparatus 100 may provide the plurality of display areas 411, 412 in a location of a predetermined ratio in the width of the bottom area (or the bottom surface) of a space included in the background area. For example, the electronic apparatus 100 may provide the plurality of display areas 411, 412 in a location of 50% - 70% of the width of the bottom area. For example, when the multi-view mode is executed for the first time, the plurality of display areas 411, 412 may be provided side by side in the same location based on the width of the bottom area.

According to an embodiment, the UI images, the sizes, etc. of the plurality of display areas 411, 412 may be set in advance. However, they may be changed according to a user command, a context of the electronic apparatus 100, etc. For example, the context of the electronic apparatus 100 may include the current time, the weather, a selected content, the number of the users, the locations of the users, etc.

According to an embodiment, if the first display area 411 is selected between the plurality of display areas 411, 412, a UX experience for improving the concentration for the first display area 411 may be provided.

According to an embodiment, as illustrated in FIG. 4B, in a screen 420 that is provided after the first display area 411 is selected, an effect that the first display area 411 is expanded, and the expanded first display area 421 moves in the front direction in the bottom area may be provided. For example, an effect that the size of the first display area 411 is expanded by about 1.2 times - 2 times, and then the expanded first display area becomes close to the user direction may be provided. For example, the electronic apparatus 100 may provide an effect that the size of the selected first display area 411 is gradually expanded until its size becomes 1.2 times - 2 times, and the expanded first display area becomes gradually close to the user direction.

According to an embodiment, as illustrated in FIG. 4B, an effect that the second display area 412 that was not selected is reduced, and the reduced second display area 422 moves in the rear direction in the bottom area may be provided. For example, an effect that the size of the second display area 412 is reduced by about 0.5 times - 0.8 times, and then the reduced second display area becomes far from the user direction may be provided. For example, the electronic apparatus 100 may provide an effect that the size of the second display area 412 that was not selected is gradually reduced until its size becomes 0.5 times - 0.8 times, and then the reduced second display area becomes gradually far from the user direction.

According to an embodiment, as illustrated in FIG. 4B, as the background of the front side that was not displayed is additionally displayed, an effect that a sense of space of the front side of the background area 423 becomes intensified may be provided.

According to an embodiment, if the first display area 421 is selected between the plurality of display areas 421, 422, a UX experience for improving the concentration for the first display area 421 may be provided.

According to an embodiment, as illustrated in FIG. 4C, in a screen 430 that is provided after the second display area 412 is selected, an effect that the second display area 412 is expanded, and the expanded second display area 432 moves in the front direction in the bottom area may be provided.

According to an embodiment, as illustrated in FIG. 4C, an effect that the first display area 411 that was not selected is reduced, and the reduced first display area 431 moves in the rear direction in the bottom area may be provided.

According to an embodiment, as illustrated in FIG. 4C, as the background of the front side that was not displayed is additionally displayed, an effect that a sense of space of the front side of the background area 433 becomes intensified may be provided.

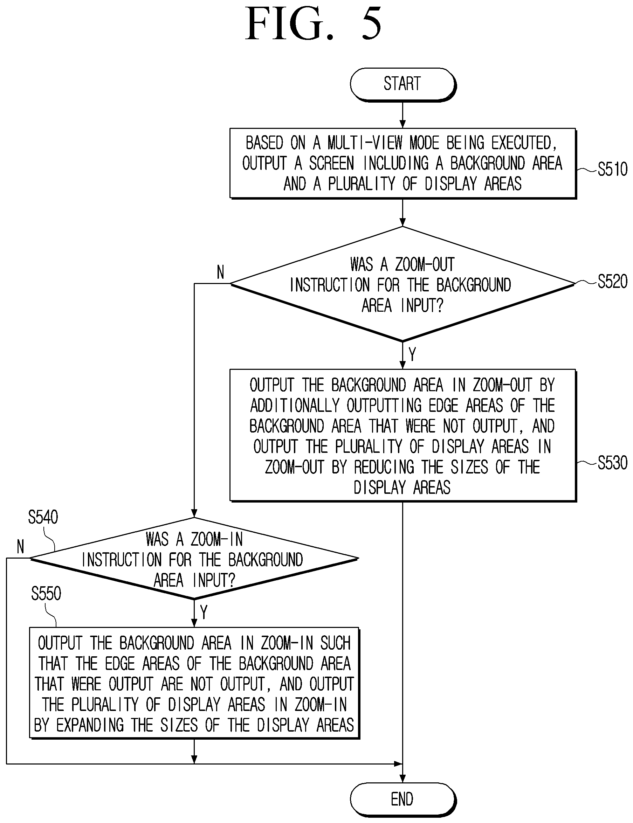

FIG. 5 is a flow chart for illustrating a control method for an electronic apparatus according to one or more embodiments.

According to FIG. 5, in the operation S510, if the multi-view mode is executed, the electronic apparatus 100 may output a screen including a background area and a plurality of display areas.

In the operation S520, if a zoom-out instruction for the background area is input , the electronic apparatus 100 may output the background area in a zoomed-out state by additionally outputting edge areas of the background area that were not output, and output the plurality of display areas in a zoomed-out state by reducing the sizes of the display areas in the operation S530.

In the operation S540, if a zoom-in instruction for the background area is input, the electronic apparatus 100 may output the background area in a zoomed-in state such that the edge areas of the background area that were output are not output, and output the plurality of display areas in a zoomed-in state by expanding the sizes of the display areas in the operation S550.

In FIG. 5, orders were mapped to all steps for the convenience of explanation, but it is obvious that the orders of steps that are not related to orders or that can be performed in parallel, etc. are not necessarily limited to the orders.

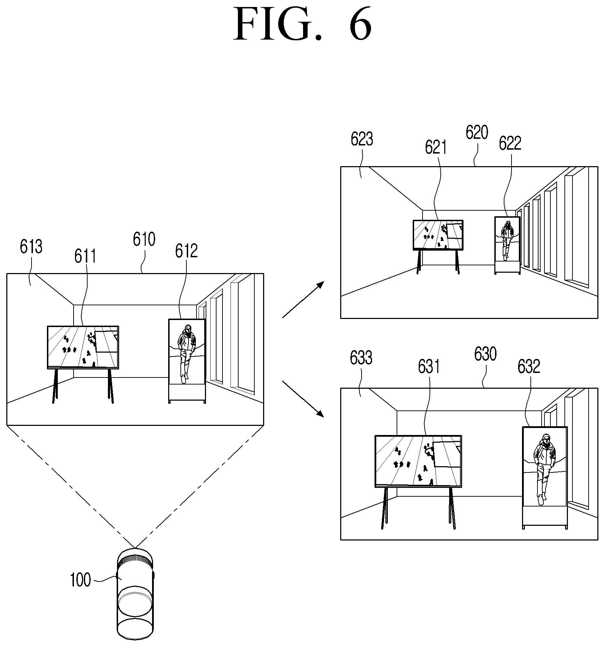

FIG. 6 is diagrams for illustrating a method of providing a multi-view mode according to one or more embodiments.

According to FIG. 6, if the multi-view mode is executed, the electronic apparatus 100 may provide a screen 610 including a plurality of display areas 611, 612 and a background area 613 as illustrated on the left side.

According to an embodiment, if a zoom-out instruction for the background area is input, the electronic apparatus 100 may scale down the screen and output the screen. For example, the electronic apparatus 100 may output the background area in a zoomed-out state (623) by additionally outputting the edge areas of the background area that were not output, and output the plurality of display areas in a zoomed-out state (621, 622) by reducing the sizes of the display areas as in the screen 620 illustrated in the upper right part. For example, in the memory 120, entire images for the background area are stored, and among the stored entire images, additional images other than the image currently provided on the screen may be additionally output in the edge areas of the background area. In this case, the electronic apparatus 100 may output the currently provided image by reducing it according to a scale-down ratio, and additionally output new images in the edge areas, but maintain the size of the entire projection image.

According to an embodiment, if a zoom-in instruction for the background area is input, the electronic apparatus 100 may scale up the screen and output the screen. For example, the electronic apparatus 100 may output the background area in a zoomed-in state (633) such that the edge areas of the background area that were output are not output, and output the plurality of display areas in a zoomed-in state (631, 632) by expanding the sizes of the display areas as in the screen 630 illustrated in the lower right part. For example, the electronic apparatus 100 may output the currently output image by expanding it according to a scale-up ratio, but may not output the edge areas such that the size of the entire projection image is maintained.

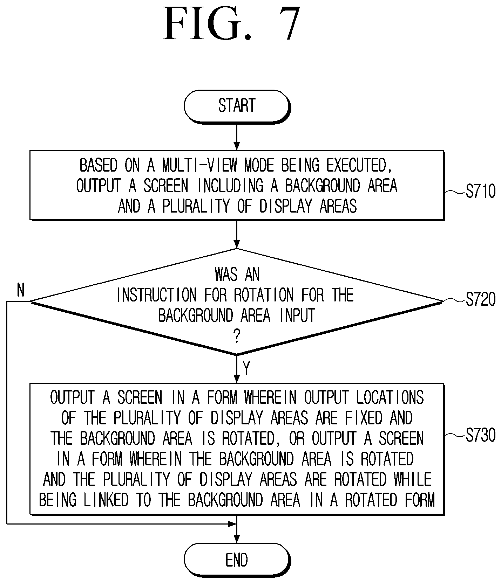

FIG. 7 is a flow chart for illustrating a control method for an electronic apparatus according to one or more embodiments.

According to FIG. 7, in the operation S710, if the multi-view mode is executed, the electronic apparatus 100 may output a screen including a background area and a plurality of display areas.

In the operation S720, if an instruction for rotation for the background area is input, the electronic apparatus 100 may output a screen in a form wherein output locations of the plurality of display areas are fixed and the background area is rotated, or output a screen in a form wherein the background area is rotated and the plurality of display areas are rotated while being linked to the background area in a rotated form in the operation S730.

In FIG. 7, orders were mapped to all steps for the convenience of explanation, but it is obvious that the orders of steps that are not related to orders or that can be performed in parallel, etc. are not necessarily limited to the orders.

FIG. 8 is a diagram for illustrating a method of providing a multi-view mode according to one or more embodiments.

According to FIG. 8, if the multi-view mode is executed, the electronic apparatus 100 may provide a screen 810 including a plurality of display areas 811, 812 and a background area 813 as illustrated on the left side.

According to an embodiment, if an instruction for rotation for the background area is input, the electronic apparatus 100 may output a screen 820 in a form wherein output locations of the plurality of display areas 821, 822 are fixed and the background area 823 is rotated, as in the screen 820 illustrated in the upper right part.

According to an embodiment, an instruction for rotation may be received through at least one of a remote control signal, a voice input, or a gesture input.

According to another embodiment, the electronic apparatus 100 may automatically perform rotation for the background area based on user location recognition, eye tracking, etc. For example, the electronic apparatus 100 may identify a user location or a user gaze based on at least one of object recognition, object detection, object tracking, or image segmentation. For example, the electronic apparatus 100 may identify a user location or a user gaze by using technologies such as semantic segmentation of extracting objects included in a photographed image by dividing them into each type, instance segmentation of recognizing objects by dividing each object even for objects of the same type, a bounding box in a quadrangle form including a detected object when detecting an object included in an image, etc. depending on needs.

According to an embodiment, if an instruction for rotation for the background area is input, the electronic apparatus 100 may output a screen 830 in a form wherein the background area 833 is rotated and a plurality of display areas 831, 832 are rotated while being linked to the background area in a rotated form as in the screen 830 illustrated in the lower right part.

According to an embodiment, a rotation angle and/or a rotation form may be determined based on a user command, a user location, a location of a user gaze, etc. For example, the electronic apparatus 100 may provide a UI for setting a rotation angle, and rotate the background area and/or the display areas based on a rotation angle input through the UI. Alternatively, the electronic apparatus 100 may rotate the background area and/or the display areas based on a rotation angle input by a user voice.

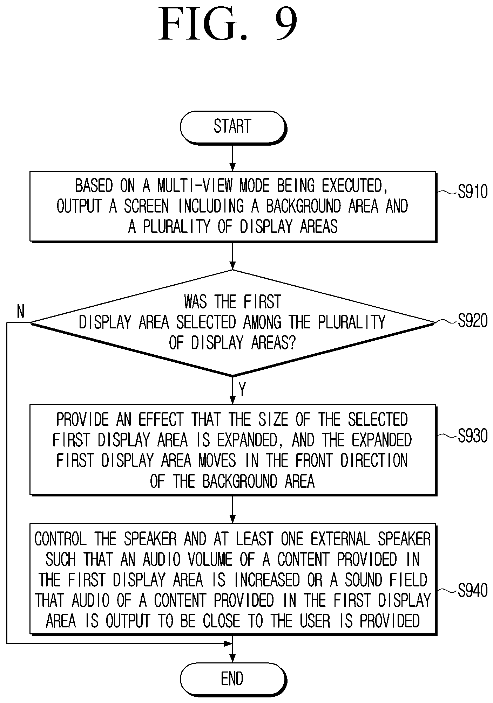

FIG. 9 is a flow chart for illustrating a control method for an electronic apparatus according to one or more embodiments.

According to FIG. 9, in the operation S910, if the multi-view mode is executed, the electronic apparatus 100 may output a screen including a background area and a plurality of display areas.

In the operation S920, if the first display area is selected among the plurality of display areas, the electronic apparatus 100 may provide an effect that the size of the selected first display area is expanded, and the expanded first display area moves in the front direction of the background area in the operation S930.

In the operation S940, the electronic apparatus 100 may control the speaker and/or at least one external speaker such that an audio volume of a content provided in the first display area is increased or a sound field (or a sense of space) that audio of a content provided in the first display area is output to be close to the user is provided.

According to an embodiment, when rendering acoustic signals to be output from a plurality of speaker units (including at least one of an internal speaker or an external speaker), the electronic apparatus 100 may render the signals such that a sound field that audio of a content provided in the first display area is output to be close to the user is provided. Afterwards, the electronic apparatus 100 may transmit a corresponding acoustic signal to an external speaker device to provide a sound field if necessary.

In FIG. 9, orders were mapped to all steps for the convenience of explanation, but it is obvious that the orders of steps that are not related to orders or that can be performed in parallel, etc. are not necessarily limited to the orders.

According to the aforementioned various embodiments, in a multi-view screen, an effect that not only the size of a displayed content is changed but also a content that was not selected becomes far from the user gaze together with a theme screen having a sense of space according to the user's selection of a content is provided, and thus the user's concentration on the content for the selected screen can be improved.

Methods according to the aforementioned various embodiments of the disclosure may be implemented just with software upgrade, or hardware upgrade for an electronic apparatus.

Also, the aforementioned various embodiments of the disclosure may also be performed through an embedded server provided on an electronic apparatus, or an external server of an electronic apparatus.

According to an embodiment of the disclosure, the aforementioned various embodiments may be implemented as software including instructions stored in machine-readable storage media, which can be read by machines (e.g.: computers). The machines refer to devices that call instructions stored in a storage medium, and can operate according to the called instructions, and the devices may include an electronic apparatus according to the aforementioned embodiments (e.g.: an electronic apparatus A). In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term 'non-transitory' only means that a storage medium does not include signals, and is tangible, but does not indicate whether data is stored in the storage medium semi-permanently or temporarily.

Also, according to an embodiment of the disclosure, the methods according to the aforementioned various embodiments may be provided while being included in a computer program product. A computer program product refers to a product, and it can be traded between a seller and a buyer. A computer program product can be distributed in the form of a storage medium that is readable by machines (e.g.: compact disc read only memory (CD-ROM)), or distributed on-line through an application store (e.g.: Play Store^{™}). In the case of on-line distribution, at least a portion of a computer program product may be stored in a storage medium such as the server of the manufacturer, the server of the application store, and the memory of the relay server at least temporarily, or may be generated temporarily.

In addition, each of the components according to the aforementioned various embodiments (e.g.: a module or a program) may consist of a singular object or a plurality of objects. Also, among the aforementioned corresponding sub components, some sub components may be omitted, or other sub components may be further included in the various embodiments. Alternatively or additionally, some components (e.g.: a module or a program) may be integrated as an object, and perform the functions that were performed by each of the components before integration identically or in a similar manner. Operations performed by a module, a program, or other components according to the various embodiments may be executed sequentially, in parallel, repetitively, or heuristically. Or, at least some of the operations may be executed in a different order or omitted, or other operations may be added.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic apparatus comprising:
an outputter;
memory storing at least one instruction; and
at least one processor operatively connected with the outputter and the memory,
wherein the at least one processor is configured to, by executing the at least one instruction:
based on a multi-view mode being executed, control the image output part to output a screen including a background area and a plurality of display areas, and
based on a first display area being selected among the plurality of display areas, control the image output part to provide a visual effect that a size of the first display area is expanded, and the expanded first display area moves in a front direction in the background area.

2. The electronic apparatus of claim 1,
wherein the at least one processor is configured to, by executing the at least one instruction:
control the outputter to provide a visual effect that a size of a second display area that was not selected among the plurality of display areas is reduced, and the reduced second display area moves in a rear direction in the background area.

3. The electronic apparatus of claim 2,wherein the background area is an area having a sense of space, and
wherein the at least one processor is configured to, by executing the at least one instruction:
identify a bottom area included in the background area, and
control the outputter to provide a visual effect that the expanded first display area moves in the front direction in the bottom area, and the reduced second display area moves in the rear direction in the bottom area.

4. The electronic apparatus of claim 3,
wherein the at least one processor is configured to, by executing the at least one instruction:
control the outputter to provide an animation effect that the size of the first display area gradually expands and the first display area gradually moves in the front direction in the bottom area, and the size of the second display area that was not selected is gradually reduced and the second display area gradually moves in the rear direction in the bottom area.

5. The electronic apparatus of claim 1,
wherein the at least one processor is configured to, by executing the at least one instruction:
based on a zoom-out instruction for the background area being received, control the image output part to output the background area in a zoomed-out state by additionally outputting edge areas of the background area that were not output, and output the plurality of display areas in a zoomed-out state by reducing the sizes of the plurality of display areas, and
based on a zoom-in instruction for the background area being received, control the image output part to output the background area in a zoomed-in state such that the edge areas of the background area that were output are not output, and output the plurality of display areas in the zoomed-in state by expanding the sizes of the plurality of display areas.

6. The electronic apparatus of claim 1,
wherein the at least one processor is configured to, by executing the at least one instruction:
based on an instruction for rotation for the background area being input, control the outputter such that output locations of the plurality of display areas are fixed and the background area is output in a rotated form.

7. The electronic apparatus of claim 1,
wherein the at least one processor is configured to, by executing the at least one instruction:
based on an instruction for rotation for the background area being input, control the outputter such that the background area is output in a rotated form, and the plurality of display areas are output in rotated forms that are linked to the background area in the rotated form.

8. The electronic apparatus of claim 1, further comprising:
a speaker,
wherein the at least one processor is configured to, by executing the at least one instruction:
based on the size of the first display area being expanded and the first display area being output in a form of moving in the front direction in the background area, control the speaker to increase an audio volume of a content provided in the first display area and output the content at the increased audio volume.

9. The electronic apparatus of claim 1, further comprising:
a speaker,
wherein the at least one processor is configured to, by executing the at least one instruction:
based on the size of the first display area being expanded and the first display area being output in a form of moving in the front direction in the background area, control the speaker and at least one external speaker such that a sound field that audio of a content provided in the first display area is output to be close to a user is provided.

10. The electronic apparatus of claim 1,
wherein the outputter comprises:
at least one of a display or an image projection part.

11. A control method for an electronic apparatus, the control method comprising:
based on a multi-view mode being executed, outputting a screen including a background area and a plurality of display areas; and
based on a first display area being selected among the plurality of display areas, providing a visual effect of expanding a size of the first display area and moving the expanded first display area in a front direction in the background area.

12. The control method of claim 11,
wherein the providing the visual effect further comprises:
providing a visual effect of reducing a size of a second display area that was not selected among the plurality of display areas, and moving the reduced second display area in a rear direction in the background area.

13. The control method of claim 12,
wherein the background area is an area having a sense of space, and
wherein the providing the visual effect comprises:
identifying a bottom area included in the background area; and
providing a visual effect of moving the expanded first display area in the front direction in the bottom area, and moving the reduced second display area in the rear direction in the bottom area.

14. The control method of claim 13,
wherein the providing the visual effect comprises:
providing an animation effect of gradually expanding the size of the first display area and gradually moving the first display area in the front direction in the bottom area, and gradually reducing the size of the second display area that was not selected and gradually moving the second display area in the rear direction in the bottom area.

15. A non-transitory computer-readable medium storing computer instructions which, when executed by a processor of an electronic apparatus, cause the electronic apparatus to perform operations,
wherein the operations comprise:
based on a multi-view mode being executed, outputting a screen including a background area and a plurality of display areas; and
based on a first display area being selected among the plurality of display areas, providing a visual effect that a size of the first display area is expanded, and the expanded first display area moves in a front direction in the background area.
